# EUROPEAN PATENT SPECIFICATION

(11) **EP 3 253 836 B1**
(45) Date of publication and mention of the grant of the patent: **28.11.2018**
(21) Application number: 16712476.7
(22) Date of filing: 04.02.2016
(51) Int. Cl.: G09F 3/02

(54) **INFORMATION CARRIER FOR REUSABLE CONSUMPTION PACKAGING**
INFORMATIONSTRÄGER FÜR WIEDERVERWENDBARE VERBRAUCHSVERPACKUNG
SUPPORT D'INFORMATIONS POUR EMBALLAGE DE CONSOMMATION RÉUTILISABLE

(30) Priority: 06.02.2015 BE 201505058
(43) Date of publication of application: 13.12.2017
(73) Proprietor: Drukkerij Voet BVBA, 9800 Deinze (BE)
(72) Inventor: VOET, Philippe, 9800 Deinze (BE)
(74) Representative: Brantsandpatents bvba
(86) International application number: PCT/IB2016/050575
(87) International publication number: WO 2016/125101

(56) References cited:
- WO-A1-2012/028520
- US-A1- 2012 061 014
- US-A1- 2013 048 221

## Description

### TECHNICAL FIELD

The invention relates to an information carrier for a reusable consumption packaging.

### STATE OF THE ART

It is generally known to provide products, such as foods, with an information carrier or label on the exterior. The information carrier or label can be used to show product information on the outside of a package. Moreover, the label ensures that the product can be recognised. Glue can be used to affix a label to a packaging.

EP 0 349 670 describes a label for containers, in particular for glass or plastic bottles. The label, in the form of a sheet that can be printed on and is made of foil material, preferably of paper or plastic, can be applied to a surface of the container by means of an adhesive, wherein the sheet is divided into two sections by a weakening line and the rear of one of the two sections is provided with a material reducing or inhibiting the adhesive action of the adhesive, in particular cold glue. EP 0 349 670 states that said material preferably is applied in a superficial layer. The section provided with the material reducing or inhibiting the adhesive action, can be removed by hand. EP 0 349 670 does not state how to remove the cold glue and/or the material reducing or inhibiting the adhesive action of the cold glue.

EP 1 564 706 describes a label that can be applied to an object, more specifically a reusable container, by means of a wet glue, and which label comprises an oriented plastic film that shrinks under the influence of heat, and wherein the label is textured on the glue side in such a way as to increase the surface area and therefore the engagement surface of the wet glue. On its glue side, the label can be provided with a moisture-absorbing layer making it easier to wash off the label. Wet glue can be applied in both a superficial thin layer and in an array of lines or dots. EP 1 564 706 does not state the degree to which the wet glue or moisture-absorbing layer remain adhered to the reusable container when washing off the label in an aqueous solution at high temperature.

Document US 2013/048221 discloses a label having an adhesive layer with a Tg below -30 °C.

There is a need for an alternative way of applying an information carrier to a reusable consumption packaging enabling the washing-off of the information carrier from the reusable consumption packaging without residual adhesive being left behind on the reusable consumption packaging.

The present invention intends to find a solution to at least some of the above-mentioned problems.

### SUMMARY OF THE INVENTION

One aspect of the invention relates to an information carrier for a reusable consumption packaging, for instance a reusable bottle of plastic or glass, comprising at least two sides of which a front side is provided with information and a rear side is at least partially provided with glue, wherein the glue has a glass transition temperature of below -30°C, characterised in that said glue is at least partially provided with a coating, said coating is provided with a discontinuous pattern.

The glass transition temperature of below -30°C ensures that the glue loses its adhesive character at moderately elevated temperatures, for instance upwards of 70°C.

The coating neutralises the adhesive action of the glue relative to another object, for instance relative to a reusable consumption packaging.

According to one aspect of the information carrier, the glue is provided in a discontinuous pattern.

Providing the glue in a discontinuous pattern is a way of ensuring adequate adhesion between an information carrier and a reusable consumption packaging under conditions of storage and/or use, whereas the quantity of glue used is limited and the removal of the information carrier from the reusable consumption packaging is made easier when contacting an aqueous solution at elevated temperatures.

Providing the coating in a discontinuous pattern is a way of allowing an adequate adhesion between an information carrier and a reusable consumption packaging under conditions of storage and/or use, whereas the removal of the information carrier from the reusable consumption packaging is made easier when contacting an aqueous solution at elevated temperatures.

Another aspect of the invention relates to a method of producing washable information carriers for reusable consumption packagings, which method comprises the following steps:
- providing a web or film material;
- applying a glue layer to one side of the web or film material;
- providing a coating layer on the glue layer,
- providing a printing on the reverse side of the web material or film material;
- punching information carriers in the web material or film material;
wherein the coating layer is provided in a discontinuous pattern.

The use of this method will permit large-scale production of information carriers.

### DESCRIPTION OF THE FIGURES

For a better understanding of the present invention, reference is made to the detailed description of the invention, by way of example, which should be read in combination with the following figures:
Figure 1 is a sketch of a possible embodiment of an information carrier provided with a glue, which glue is provided with a coating, according to the invention.
Figure 2 is a possible embodiment of a discontinuous pattern, according to the invention.
Figure 3 is a possible embodiment of a discontinuous pattern, according to the invention.
Figure 4 is a possible embodiment of a discontinuous pattern, according to the invention.
Figure 5 is a possible embodiment of a discontinuous pattern, according to the invention.

### DETAILED DESCRIPTION

The invention relates to an information carrier for a reusable consumption packaging.

Unless defined differently, all phrases used in the description of the invention, including technical and scientific phrases, will have the meaning as generally understood by an expert in the technical field of the invention.

The phrases 'comprises', 'comprise' and 'comprising' are inclusive or open terms indicating the presence of what follows, and do not rule out or bar the presence of other components, characteristics, elements, members, steps known from or described in the state of the art.

According to a first aspect, the invention relates to an information carrier for a reusable consumption packaging, for instance a reusable bottle of plastic or glass, comprising at least two sides of which a front side is provided with information and a rear side is at least partially provided with a glue, wherein the glue has a glass transition temperature of below -30°C, characterised in that said glue is at least partially provided with a coating, said coating is provided with a discontinuous pattern. Preferably the information carrier of the present invention is applied to a reusable consumption packaging of, for instance glass, plastic or metal. However, this does not stand in the way of the information carrier being used on non-reusable consumption packagings or surfaces of other objects. A non-exclusive example of 'another object' is a metal storage rack placed in a cold store as supporting structure of, for example, reusable consumption packagings and their content. The front side of the information carrier preferably contains information such as an indication, a brand and/or a composition of a content of a reusable consumption packaging. An indication may, for instance, refer to an expiration date or to any decorative element. An indication may additionally also be formed by providing the front side of the information carrier with a specific colour, wherein optionally a specific meaning can be attached to such a colour. In an alternative embodiment, no information or colour is placed on the front side of the information carrier. A rear side of the information carrier is at least partially coated with a glue. The glue serves as an intermediate substance which, due to its adhesive action, adheres an information carrier and a reusable consumption packaging to each other. The phrase 'adhesive action' refers to the capacity of a glue to adhere several objects to each other. Preferably the surface of the rear side of the information carrier is provided with glue, or is covered in a glue, to such an extent that the information carrier can be adhered to a reusable consumption packaging. The glass transition temperature is an important property of a glue. The glue's glass transition temperature is the temperature at which a glue becomes brittle upon cooling or soft upon heating. Above its glass transition temperature, a glue consequently shows elastic behaviour that is higher than when below its glass transition temperature, at which a glue is rigid and brittle and shows a more limited elastic behaviour. A glue comprises polymers and the glass transition temperature of the glue is, among other things, defined by the glass transition temperature of said polymers. A glue comprising polymers that are at a temperature above their glass transition temperature, can be used as a pressure-sensitive glue. A pressure-sensitive glue is only capable of adhering to a surface when a pressure is applied.

The information carrier of the present invention preferably can be washed off. The phrase 'can be washed off' refers to the possibility to separate an information carrier, initially adhered to a reusable consumption packaging by means of a glue, from the reusable consumption packaging by washing it off. The phrase 'washing off' refers to bringing a reusable consumption packaging, to which an information carrier is adhered by means of a glue, into contact with an aqueous solution at elevated temperature, wherein information carrier and reusable consumption packaging are separated from each other. The separation of information carrier from reusable consumption packaging during washing off is caused by the glue losing its adhesive character under the conditions of washing off. More preferably the reusable consumption packaging shows no residual adhesive after washing off an information carrier. Preferably the glue of the present invention relates to a glue having a glass transition temperature of below -30°C. The glass transition temperature of below - 30°C ensures that the glue loses its adhesive character at moderately elevated temperatures, for instance upwards of 70°C. At these moderately elevated temperatures the glue will curdle, as a result of which the glue loses its adhesive character. Hence, washing off an information carrier from a reusable consumption packaging is possible provided use is made of an aqueous solution having a moderately elevated temperature, for instance upwards of 70°C. This is advantageous when it is desired to wash off an information carrier applied to a reusable consumption packaging, for instance, in case of reuse. For obtaining a glue having a glass transition temperature of below -30°C, the rubbers polychloroprene and polyisoprene, for instance, can be used in the formula, given the low glass transition temperatures of these rubbers. In an alternative embodiment of the invention, the adhesive character of a glue having a glass transition temperature of below -30°C, which adheres an information carrier to a reusable consumption packaging, can be undone by employing an air flow having a moderately elevated temperature, for instance upwards of 70°C. Preferably, such an air flow is employed at the level of the information carrier. The low glass transition temperature of -30°C has the additional advantage of the glue exhibiting an adequately elastic behaviour at a low temperature and, as a consequence, is suitable for low-temperature uses such as pressure-sensitive glue. The phrase 'low temperature uses' refers, for instance, to uses of a glue at low temperatures, wherein said glue ensures adequate adhesion between an information carrier and a reusable consumption packaging at said low temperatures. This is, for instance, the case in cold storage or deep-freeze storage of consumption packagings, such as bottles of glass or plastic, and their content. In addition, a glue having a glass transition temperature of below -30°C also ensures a good bond between an information carrier and a reusable consumption packaging at normal ambient temperatures.

According to the invention, the glue is at least partially provided with a coating. The coating neutralises the adhesive action of the glue relative to another object. In case of an information carrier arranged on a reusable consumption packaging by means of a glue, the coating is situated between the glue and the reusable consumption packaging. The presence of the coating between glue and reusable consumption packaging neutralises the adhesive action of the glue relative to the consumption packaging. Under conditions in which the information carrier should keep its adhesion to the reusable consumption packaging, which include normal ambient temperatures in addition to conditions for cold storage and deep-freeze storage, it is required that the adhesive action of the glue is neutralised to a limited extent only by the presence of the coating, which means only providing the glue with said coating to a limited extent. Under conditions in which the information carrier should lose its adhesion to a reusable consumption packaging, which include the washing off of an information carrier from a reusable consumption packaging, providing a coating has an advantage. When the coating is present, the glue will, after all, have a more limited adhesive action relative to another object, such as an information carrier, than it would in the absence of the coating. The coating must not be hydrophobic, so that water molecules will not be repelled by the coating when washing off an information carrier from a reusable consumption packaging. Consequently, the coating is water-neutral or hydrophilic and comprises water-neutral and/or hydrophilic polymers. The coating may be thermo-setting or UV-setting. Preferably, the coating is UV-setting. Preferably, the coating is a hydrophilic coating. A hydrophilic coating has a hydrophilic character, which is an indication of the hydrophilic coating's tendency to attract water molecules. A non-exclusive example of a hydrophilic coating is a hydrophilic silicone resin. When washing off an information carrier from a reusable consumption packaging, the hydrophilic coating present will attract water molecules and therefore augment the migration of water molecules towards the glue. As a result, an aqueous solution at elevated temperatures is able to reach the glue more effectively, as a result of which the aqueous solution can be employed more effectively for undoing the glue's adhesive action.

According to one aspect of the information carrier, the glue is provided in a discontinuous pattern. The phrase 'discontinuous pattern' refers to a layer that is not continuous and, as a result, comprises one or more interspaces or openings, comprised in a pattern (that may or may not be a geometric, symmetric or any random pattern). In one embodiment of the invention, the dimensions of the interspaces or openings are at least 0.05 mm, preferably at least 0.10 mm, and more preferably at least 0.15 mm. Providing the glue in a discontinuous pattern is a way of ensuring adequate adhesion between the information carrier and the reusable consumption packaging under conditions of storage and/or use, while the quantity of glue used is limited and the removal of the information carrier from the reusable consumption packaging is made easier when contacting an aqueous solution at elevated temperatures. The phrase 'conditions of storage and/or use' refers to the conditions under which a reusable consumption packaging provided with an information carrier finds itself in storage, namely at lowered temperatures and/or deep-freeze temperatures, and/or under conditions of use, namely at ambient temperatures. The phrase 'adequate adhesion' refers to an adhesion between information carrier and reusable consumption packaging corresponding with a set, desired degree of adhesion. It may, for instance, be desired that the entire surface of the information carrier's rear side be adhered to a reusable consumption packaging and therefore fully connects to said reusable consumption packaging. For covering the information carrier with glue in a specific thickness, providing the glue in a discontinuous pattern requires less glue than would be the case if the glue had to be provided in a continuous layer. Providing a lower quantity of glue is economically advantageous. A lower quantity of glue will also be advantageous when removing or separating an information carrier from a reusable consumption packaging as compared to a higher quantity of glue. In addition, the interspaces or openings in the discontinuous pattern of the glue provide channels, which channels are able to transport an aqueous solution at elevated temperatures rapidly through the interphase between information carrier and consumption packaging. Providing glue in a discontinuous pattern is therefore advantageous for washing off an information carrier from a reusable consumption packaging.

According to the invention the coating is provided in a discontinuous pattern. Providing the coating in a discontinuous pattern is a way of allowing an adequate adhesion between the information carrier and the reusable consumption packaging under conditions of storage and/or use. Providing the coating on the glue in a discontinuous pattern can, after all, make sure that there are certain zones of the glue that have been coated, whereas other zones of the glue have not. The zones of the glue that have not been coated, or the uncoated zones of the glue, may under conditions of storage and/or use still effect adequate adhesion between information carrier and reusable consumption packaging. It may, for example, be of importance that the uncoated zones of the glue are sufficiently large and that, relative to the rear side of the information carrier, the uncoated zones are positioned at desired positions. At the level of the zones of glue that have been provided with coating, or the glue's coated zones, the adhesive action of the glue relative to another object, such as a reusable consumption packaging, is neutralised. Due to said neutralisation of the adhesive action of the glue, providing a coating in a discontinuous pattern on the glue will, as a result, facilitate removing the information carrier from an object, such as a reusable consumption packaging, when contacting an aqueous solution at elevated temperatures. In addition, the interspaces or openings in the discontinuous pattern of the coating provide channels, which channels are able to transport an aqueous solution at elevated temperatures rapidly through the interphase between information carrier and consumption packaging, which is advantageous for washing off an information carrier from a reusable consumption packaging. In one embodiment of the invention wherein a hydrophilic coating is provided on the glue in a discontinuous pattern, the hydrophilic coating due to its hydrophilic character shows a tendency to attract water molecules, as a result of which the removal or washing off of an information carrier from a reusable consumption packaging is facilitated. The presence of the hydrophilic coating will, after all, augment the migration of water molecules towards the glue, as a result of which an aqueous solution at elevated temperatures can be employed more effectively to undo the glue's adhesive action.

According to one aspect of the information carrier, the discontinuous pattern consists of a line pattern. The phrase 'line pattern' refers to a discontinuous pattern wherein the interspaces or openings are at least partially bounded by continuous lines. Preferably, said continuous lines have been organised in a grid, wherein at least one continuous line is oriented in a different direction than another continuous line, and the differently oriented continuous lines intersect. The difference in orientation may correspond with any angle. The continuous lines may be straight or may show any or a specific curved form. Applying the glue in continuous lines has the advantage that each continuous line can be applied in one uninterrupted motion.

According to one aspect of the information carrier, the discontinuous pattern consists of a plurality of geometric figures. Any geometric figure is possible, including circles, squares, rectangles, triangles, polygonal structures, irregular structures and slit-shaped structures.

According to one aspect of the information carrier, the rear side of the information carrier is provided with the glue in a coverage degree of at least 40%, preferably at least 50%, wherein the coverage degree is expressed relative to the surface area of the information carrier. In other words, at least 40%, preferably at least 50%, of the surface area of the rear side of the information carrier is provided with the glue and, as a result, is covered with the glue. Such coverage degrees of glue are desired when an adhesion of an information carrier over its full surface area to the reusable consumption packaging is strived for. In alternative embodiments, wherein it is desired to adhere only a part or parts of the surface area of the information carrier to the reusable consumption packaging under conditions of storage and/or use, lower coverage degrees of glue can be strived for. If the rear side of the information carrier is provided with glue in a discontinuous pattern, the coverage degree is defined by the size, the shape, the number and the density of the interspaces or openings in the discontinuous pattern.

According to one aspect of the information carrier, the glue is provided with the coating in a coverage degree of at least 10%, and 60% at the most, preferably 50% at the most, wherein the coverage degree is expressed relative to the surface area of the information carrier. If the glue is provided with the coating in a discontinuous pattern, the coverage degree of the coating is defined by the size, the shape, the number and the density of the interspaces or openings in the discontinuous pattern. Desired coverage degrees of the coating may depend on the desired coverage degrees of glue and vice versa. If adhesion of an information carrier over its full surface area to a reusable consumption packaging is strived for under conditions of storage and/or use, a low coverage degree of glue can, for instance, very well be combined with a low coverage degree of coating. In alternative embodiments, wherein it is desired to adhere only a part or parts of the surface area of the information carrier to the reusable consumption packaging under conditions of storage and/or use, higher coverage degrees of coating can be strived for.

According to one aspect of the information carrier, the information carrier consists of paper or of a film material. The phrase 'film material' refers to a thin-layered plastic. Non-exclusive examples of plastics that may serve as film material are polypropylene, polyethylene and polyvinyl chloride.

According to one aspect of the information carrier, the paper has a grammage of 60 to 115 g/m², measured according to ISO 536.

According to one aspect of the information carrier, the film material has a grammage of 30 to 96 g/m², measured according to ISO 536.

According to a second aspect, the invention relates to a reusable consumption packaging, for instance a reusable bottle of plastic or glass, provided with an information carrier, wherein the latter concerns an information carrier according to the invention.

According to a third aspect, the invention relates to a method of producing washable information carriers for reusable consumption packagings, which method comprises the following steps:
- providing a web or film material;
- applying a glue layer to one side of the web or film material;
- providing a printing on the reverse side of the web or film material;
- punching information carriers in the web or film material;
wherein the glue layer is provided in a discontinuous pattern.

The method is suitable for producing information carriers which, under conditions of storage and/or use, can be adhered and are able to remain adhered to reusable consumption packagings, and in addition can be separated from the reusable consumption packagings by washing off the information carriers through contact with an aqueous solution at elevated temperatures. In a first step of the method, a web or film material is provided. A 'web or film material' is defined as a web of material, suitable for making labels, extending in the longitudinal direction. The web or film material consists of a layer of paper or of a layer of film material. Non-exclusive examples of plastics that may serve as film material are polypropylene, polyethylene and polyvinyl chloride.
In a second step, a layer of glue or a glue layer is applied to one side of the web or film material. Preferably the glue layer has a limited thickness. The web or film material provided with a glue layer is applied onto a carrier by means of the glue layer. The term 'carrier' refers to a material made of paper, plastic, fabric, foil or any other material that is suitable to shield the glue layer from the surroundings. The carrier serves as protection of the glue layer until the information carrier has to be applied to a reusable consumption packaging, so that the information carrier provided with a glue layer can be stored and handled without the glue layer being able to adhere to other information carriers or other objects. The carrier may be provided with a peel-off cover layer to ensure that the information carrier can easily be removed from the carrier and that the glue layer remains adhered to the information carrier when it is separated from the carrier. The web or film material protected by the carrier can be subjected to a cleaning step, by means of anaqueous solution. In addition, the web or film material can be subjected to a corona treatment. Both the cleaning step and the corona treatment are, among other things, aimed at increasing the surface tension of the web or film material, thus enabling a better adhesion of ink to the latter. The information carrier provided with a glue layer, applied to a carrier, can be stored in rolls. Such rolls are then unwound for further treatment steps.

In a third step, one side of the web or film material, opposite the side of the web or film material provided with a glue layer, is provided with a printing. The printing can be applied using various processes, e.g. flexographic printing, gravure printing, screen printing, warm press printing, cold press printing, hot foil printing, cold foil printing, letterpress printing, rotogravure printing, offset printing and/or digital printing. Non-exclusive examples of digital printing techniques are ink jet printing and laser printing.

A fourth step of the method relates to punching information carriers in the web or film material. Preferably a template is used to punch the information carriers in the web or film material. After punching, the rest of the web or film material is removed and the information carriers are wound into finished rolls. Said finished rolls can be understood to be cylindrical structures onto which desired quantities of information carriers, still applied to a carrier by means of a glue layer, can be affixed. The use of this method will permit large-scale production of information carriers. An end-user will be able to separate information carriers from the carrier from a finished roll, after which, by means of their glue layer the information carriers can be attached to reusable consumption packagings, e.g. reusable bottles of plastic or glass.

In one embodiment according to the present invention the glue layer is provided in a continuous pattern. In another embodiment, said glue layer will be provided according to the method in a discontinuous pattern. Providing the glue layer in a discontinuous pattern is a way, when an information carrier is applied to a reusable consumption packaging, of ensuring adequate adhesion between the information carrier and the reusable consumption packaging under conditions of storage and/or use, whereas the quantity of glue used is limited and the removal of the information carrier from the reusable consumption packaging is facilitated when contacting an aqueous solution at elevated temperatures. For covering the information carrier with glue in a specific thickness, providing the glue layer in a discontinuous pattern requires less glue than would be the case if the glue layer had to be provided in a continuous layer. Providing a lower quantity of glue is economically advantageous. A lower quantity of glue will also be advantageous when removing or separating an information carrier from a reusable consumption packaging as compared to a higher quantity of glue. In addition, interspaces or openings in the discontinuous pattern of the glue layer provide channels, which channels are able to transport an aqueous solution at elevated temperatures rapidly through the interphase between information carrier and consumption packaging. Providing a glue layer in a discontinuous pattern is therefore advantageous for washing off an information carrier that is applied to a reusable consumption packaging.

According to one embodiment of the method, a layer of a coating or a coating layer is applied to the glue layer. In this embodiment of the method, the coating layer is applied to the glue layer after the glue layer is applied to one side of the web or film material. As described above, a web or film material onto which, according to a step of the method, a glue layer is applied to one side, is applied to a carrier by means of the glue layer. In order to employ the coating layer, the carrier is first removed from the web or film material provided with a glue layer. Once the coating layer is applied to the glue layer, by way of one side of the coating layer, the carrier is applied to an opposite side of the coating layer. In an alternative embodiment of the method a coating layer is applied to the glue layer prior to the web or film material being provided with a printing. Preferably, the coating layer exhibits a limited thickness.

According to the method, the coating layer is applied in a discontinuous pattern. Providing the coating layer in a discontinuous pattern is a way of providing the coating layer on the glue layer and simultaneously allowing an adequate adhesion between an information carrier and a reusable consumption packaging during conditions of storage and/or use. Providing a coating layer on the glue layer in a discontinuous pattern, after all, makes sure there are certain zones of the glue layer that have been coated, whereas other zones of the glue layer have not been coated. The zones of the glue that have not been coated, or the uncoated zones of the glue, may under conditions of storage and/or use still effect an adequate adhesion between information carrier and reusable consumption packaging. It may, for example, be of importance that the uncoated zones of the glue are sufficiently large, and that relative to the rear side of the information carrier the uncoated zones are positioned at desired positions. At the level of the zones of glue that have been provided with the coating, or the glue's coated zones, the adhesive action of the glue relative to another object, such as a reusable consumption packaging, is neutralised. Due to said neutralisation of the adhesive action of the glue, providing a coating in a discontinuous pattern on the glue will, as a result, facilitate removing the information carrier from an object, such as a reusable consumption packaging, when contacting an aqueous solution at elevated temperatures. In addition, the interspaces or openings in the discontinuous pattern of the coating provide channels, which channels are able to transport an aqueous solution at elevated temperatures rapidly through the interphase between information carrier and consumption packaging, which is advantageous for washing off an information carrier from a reusable consumption packaging. In one embodiment of the invention wherein a hydrophilic coating is provided on the glue in a discontinuous pattern, the hydrophilic coating, due to its hydrophilic character, shows a tendency to attract water molecules, as a result of which the removal or washing off of an information carrier from a reusable consumption packaging is facilitated. The presence of the hydrophilic coating will, after all, augment the migration of water molecules towards the glue, as a result of which an aqueous solution at elevated temperatures can be employed more effectively to undo the glue's adhesive action.

According to one embodiment of the method, one side of the web or film material is already provided with a glue layer, and the coating layer is applied to said glue layer. In other words, in this embodiment, the web or film material, provided as a first step of the method, is already provided with a glue layer.

According to another embodiment of the method, said glue layer is already provided in a continuous or discontinuous pattern. In other words, in this embodiment, the web or film material, provided as a first step of the method, is already provided with a glue layer in a discontinuous pattern.

According to another embodiment of the method, the glue layer consists of a glue having a glass transition temperature of below -30°C. The glass transition temperature of below -30°C ensures that the glue loses its adhesive character at moderately elevated temperatures, for instance upwards of 70°C. At these moderately elevated temperatures, the glue will curdle, as a result of which the glue loses its adhesive character. An information carrier, obtained according to the method, to which the invention pertains, applied to a reusable consumption packaging by means of a glue having a glass transition temperature of below -30°C, can, as a consequence, be removed from said consumption packaging by means of an aqueous solution having a moderately elevated temperature, for instance upwards of 70°C. As a consequence, the low glass transition temperature is advantageous in washing off an information carrier from a reusable consumption packaging. In addition, the low glass transition temperature of the glue has the advantage that the glue shows an adequately elastic behaviour at a low temperature and, as a consequence, is suitable for low temperature uses such as pressure-sensitive glue. As a result, an information carrier obtained through this embodiment of the method, is suitable to be adhered and remain adhered to a reusable consumption packaging at temperatures of cold storage or deep-freeze storage. An information carrier provided with such a glue is equally suitable for a good bond between an information carrier and a reusable consumption packaging at normal ambient temperatures.

According to a fourth aspect, the invention relates to a use of the method according to the invention for the production of an information carrier according to the invention.

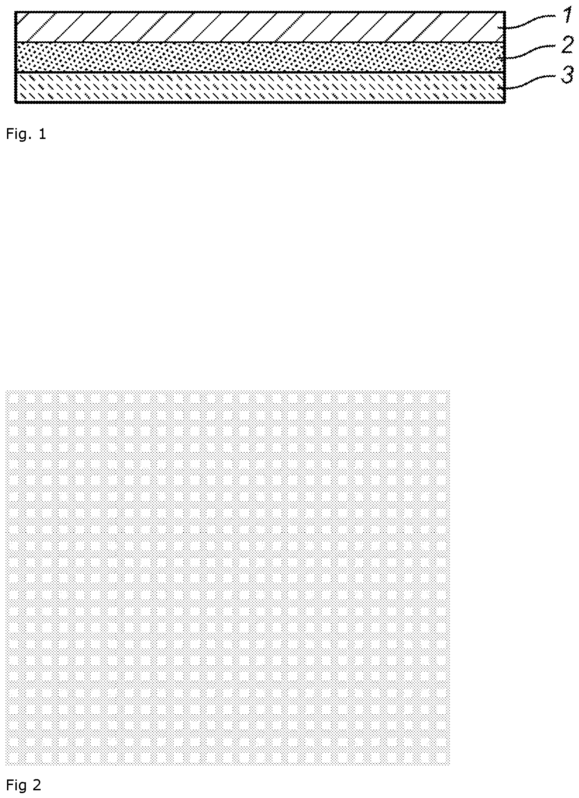

Figure 1 is a sketch of a possible embodiment of an information carrier (1) provided with a glue (2), which glue (2) is provided with a coating (3), according to the invention. According to embodiments of the present invention, the glue (2) and/or the coating (3) can be applied in a discontinuous pattern. Various possible embodiments of a discontinuous pattern, according to the invention, are shown in Figures 2-5.

Figure 2 shows a line pattern as a discontinuous pattern. The lines shown are straight and have the same width. The lines shown of the line pattern are more specifically organised in a grid, wherein the difference in orientation between differently oriented lines corresponds to 90°. The straight lines are placed in such a manner relative to each other that the interspaces or openings of the discontinuous pattern each show the shape of a square with equal sides. Applying glue (2) in such a discontinuous pattern at the rear side of an information carrier (1) will ensure an adequate adhesion of the information carrier (1) to a reusable information carrier over the entire surface area of the information carrier (1). Simultaneously, the square openings in the glue (2) create channels able to transport an aqueous solution at elevated temperatures rapidly through the interphase between information carrier (1) and consumption packaging. The square openings as well as the lower quantity of glue (2) used, as compared to a continuous layer of glue (2), enhance the washing off of the information carrier (1) from a reusable consumption packaging. Applying a coating (3) to a glue (2) according to the discontinuous pattern of Figure 2, which glue (2) is applied to the information carrier (1) in a continuous or discontinuous pattern, allows an adequate adhesion between the information carrier (1) and a reusable consumption packaging under conditions of storage and/or use. Providing the coating (3) on the glue (2) in a discontinuous pattern of Figure 2 can, after all, make sure there are certain zones of the glue (2) that have been coated (3), whereas other zones of the glue (2) have not been coated (3). The zones of the glue (2) that have not been coated (3) are still capable of exerting adequate adhesion relative to a reusable consumption packaging under conditions of storage and/or use. Both neutralisation of the adhesive action of the glue (2) in the zones coated (3), as well as the interspaces or openings in the discontinuous pattern of the coating (3) forming channels for transporting an aqueous solution through the interphase between information carrier (1) and consumption packaging, expedite the removal or washing off of an information carrier (1) from a reusable consumption packaging. If specifically a hydrophilic coating is employed as coating (3), such a coating (3) will attract water molecules due to its hydrophilic character, as a result of which washing off an information carrier (1) from a reusable consumption packaging is further facilitated.

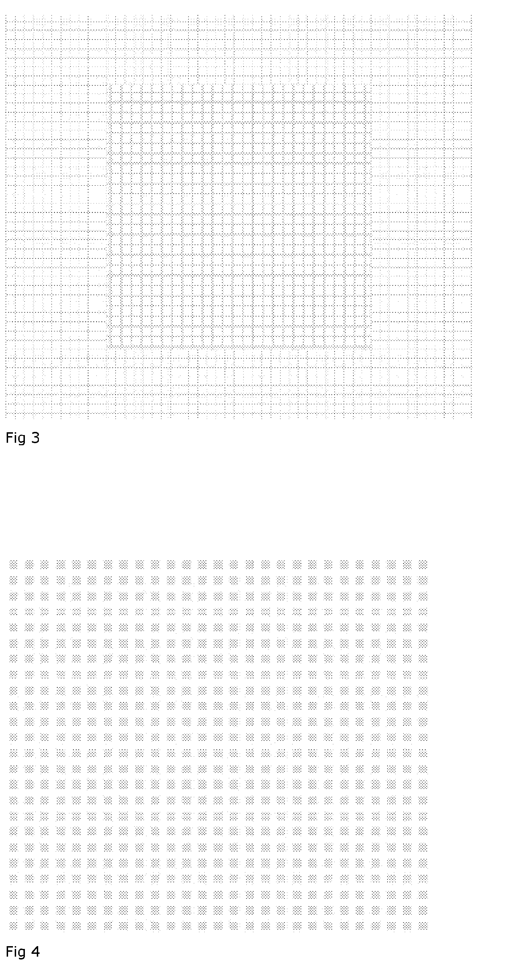

Figure 3 shows a discontinuous pattern comprising two grid patterns. Within each grid pattern the lines are straight, the lines show the same width, differently oriented lines have been oriented at a 90° angle to each other and similarly oriented lines have been placed at equal distance from each other so that the interspaces show identical dimensions and a square shape. A first section of the pattern, situated within a second section of the pattern, shows broader lines than the first section of the pattern. In one possible embodiment wherein an information carrier (1) is provided with a continuous layer of glue (2) and the coating (3) is provided on the glue (2) in a pattern according to Figure 3, the broader lines of coating (3) in the section situated within will leave a smaller quantity of glue (2) available for adhesion to a reusable consumption packaging than in the other section, so that the section situated within will have a weaker adhesion to the reusable consumption packaging. Simultaneously, the broader lines of coating (3) are favourable for washing off. This is desirable in order to avoid residual adhesive on a reusable consumption packaging after washing off an information carrier (1). Residual adhesive will, after all, be left behind sooner at locations of a reusable consumption packaging that have been adhered to a section of the information carrier (1) that was situated within, as the glue (2) present in this section is not as accessible to water molecules as the section situated outside of the section situated within.

The discontinuous pattern of Figure 4 corresponds with the discontinuous pattern of Figure 2, the difference being that lines form the interspaces between squares of glue (2) or coating (3).

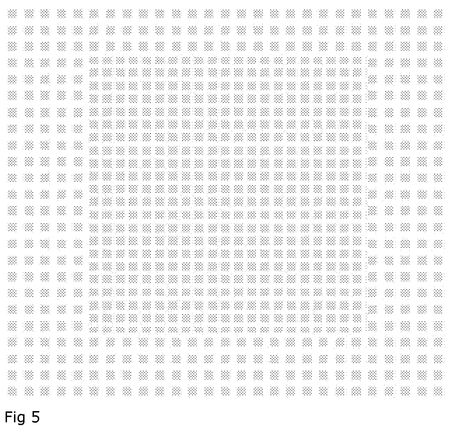

Figure 5 shows a discontinuous pattern in which a first section corresponds with the discontinuous pattern of Figure 4, whereas in a second section, situated within the first section, the squares are situated more closely together. As a result, the interspaces in the second section, situated within, are smaller than in the section situated outside. It can also be noted that the density of the squares is greater in the second section situated within than in the first section. In a possible embodiment wherein an information carrier (1) is provided with a continuous layer of glue (2) and the coating (3) is provided on the glue (2) in a pattern according to Figure 5, the higher density of coating (3) in the section situated within will leave a smaller quantity of glue (2) available for adhesion to a reusable consumption packaging than in the other section, so that the section situated within will have a weaker adhesion to the reusable consumption packaging. Simultaneously, the higher density of coating (3) is favourable for washing off. This is desirable in order to avoid residual adhesive on a reusable consumption packaging after washing off an information carrier (1).

In the following, the invention will be described on the basis of an example illustrating the invention in a non-exclusive way, and that is not intended to or must not be interpreted in a way as to limit the scope of the invention.

### EXAMPLE

In a test, identical information carriers were each provided with a continuous layer of a rubber-based glue having a glass transition temperature of below -30°C, whereas the glue, in turn, is provided with a coating in a discontinuous pattern. As information carrier, a wood-free paper was employed having a grammage, measured according to ISO 536, of 80 g/m², a length of 81 mm and a width of 70 mm. As coating, a UV-setting coating was employed that is water-neutral. Specifically, the coating was applied in 4 different patterns, wherein the coverage degree of the coating varied per individual pattern. These 4 ways of applying are referred to in this text as 'Coating 1', Coating 2', 'Coating 3' and 'Coating 4'. Coating 1 corresponds with a coating provided in a coverage degree of 75% according to the discontinuous pattern of Figure 2. Coating 2 corresponds with a coating provided in a coverage degree of 31.5% according to the discontinuous pattern of Figure 3. Coating 3 corresponds with a coating provided in a coverage degree of 25% according to the discontinuous pattern of Figure 4. Coating 4 corresponds with a coating provided in a coverage degree of 31.2% according to the discontinuous pattern of Figure 5. The information carriers were applied to identical bottles by means of the glue. After applying an information carrier to the bottle, the coating was situated between the glue and the bottle. As bottles, standard glass APO-Vichy beer bottles with a content of 25 cl were used. Concretely, 4 different samples were obtained according to the above description, which samples will be referred to in this text as 'Sample 1', 'Sample 2', 'Sample 3' and 'Sample 4'. Sample 1 corresponds with a bottle provided with an information carrier by means of glue, wherein the glue is provided with Coating 1. Sample 2 corresponds with a bottle provided with an information carrier by means of glue, wherein the glue is provided with Coating 2. Sample 3 corresponds with a bottle provided with an information carrier by means of glue, wherein the glue is provided with Coating 3. Sample 4 corresponds with a bottle provided with an information carrier by means of glue, wherein the glue is provided with Coating 4. Each sample was immersed in water including 2% of caustic solution and having a temperature of 75°C. It was then verified whether the information carriers could be separated from the bottles and it was also determined whether residual adhesive was left behind after the immersion. This was repeated twelve times for each sample. Each repetition consisted of providing a bottle with an information carrier according to the above specifications, after which the bottle provided with the information carrier was immersed in the water according to the above specifications. All information carriers were fully separated from the bottles within a few minutes. None of the bottles showed residues of coating after the immersion. In the repetitions of Sample 1, 1 out of 12 bottles showed residual adhesive. In the repetitions of Sample 2, none of the 12 bottles showed residual adhesive. In the repetitions of Sample 3, 4 out of 12 bottles showed residual adhesive. In the repetitions of Sample 4, 2 out of 12 bottles showed residual adhesive. Fully separating information carriers from the bottles, as well as the low number of bottles showing residual adhesive after immersion in the water, is an indication of the suitability of a method of attachment according to the present invention for washing off information carriers.

## Claims

1. Information carrier for a reusable consumption packaging, for instance a reusable bottle of plastic or glass, comprising at least two sides of which a front side is provided with information and a rear side is at least partially provided with a glue having a glass transition temperature of below -30°C, **characterized in that** said glue is at least partially provided with a coating, said coating is provided in a discontinuous pattern..

2. Information carrier according to claim 1, **characterized in that** the glue is provided in a discontinuous pattern.

3. Information carrier according to claim 1 or 2, **characterized in that** the discontinuous pattern consists of a line pattern.

4. Information carrier according to claim 1 or 2, **characterized in that** the discontinuous pattern consists of a plurality of geometric figures.

5. Information carrier according to any one of claims 1-4, **characterized in that** the rear side of the information carrier is provided with the glue in a coverage degree of at least 40%, preferably at least 50%, wherein the coverage degree is expressed relative to the surface area of the information carrier.

6. Information carrier according to any one of the previous claims, **characterized in that** the glue is provided with the coating in a coverage degree of at least 10%, and at the most 60%, preferably at the most 50%, wherein the coverage degree is expressed relative to the surface area of the information carrier.

7. Information carrier according to any one of claims 1-6, **characterized in that** the information carrier consists of paper or of a film material.

8. Information carrier according to claim 7, **characterized in that** the paper has a grammage of 60 to 115 g/m², measured according to ISO 536.

9. Information carrier according to claim 8, **characterized in that** the film material has a grammage of 30 to 96 g/m², measured according to ISO 536.

10. Reusable consumption packaging, for instance a reusable bottle of plastic or glass, provided with an information carrier, **characterized in that** the information carrier concerns an information carrier according to any one of claims 1-9.

11. Method for producing washable information carriers for reusable consumption packagings, which method comprises the following steps:
- providing a web or film material;
- applying a glue layer to one side of the web or film material;
- providing a coating layer onto the glue layer;
- providing a printing on the reverse side of the web or film material;
- punching information carriers in the web or film material;
**characterized in that** the coating layer is applied in a discontinuous pattern.

12. Method according to claim 11, **characterized in that** the glue layer is provided in a discontinuous pattern.

13. Method according to claim 11 or 12, **characterized in that** one side of the web or film material is already provided with a glue layer, and the coating layer is applied onto this glue layer.

14. Method according to any one of claims 10-14, **characterized in that** the glue layer consists of a glue having a glass transition temperature of below -30 °C.

15. Method according to any one of claims 11-14, wherein an information carrier according to any one of claims 1-9 is produced.

## Patentansprüche

1. Informationsträger für eine wiederverwendbare Verbrauchsverpackung, zum Beispiel eine wiederverwendbare Flasche aus Kunststoff oder Glas, mindestens zwei Seiten umfassend, von denen eine Vorderseite mit Informationen versehen ist und eine Rückseite zumindest teilweise mit einem Klebstoff versehen ist, der eine Glasübergangstemperatur von unter -30 C aufweist, **dadurch gekennzeichnet, dass** der Klebstoff zumindest teilweise mit einer Beschichtung versehen ist, wobei die Beschichtung in einem nicht durchgängigen Muster bereitgestellt ist.

2. Informationsträger nach Anspruch 1, **dadurch gekennzeichnet, dass** der Klebstoff in einem nicht durchgängigen Muster bereitgestellt ist.

3. Informationsträger nach Anspruch 1 oder 2, **dadurch gekennzeichnet, dass** das nicht durchgängige Muster aus einem Linienmuster besteht.

4. Informationsträger nach Anspruch 1 oder 2, **dadurch gekennzeichnet, dass** das nicht durchgängige Muster aus mehreren geometrischen Figuren besteht.

5. Informationsträger nach einem der Ansprüche 1-4, **dadurch gekennzeichnet, dass** die Rückseite des Informationsträgers in einem Bedeckungsgrad von mindestens 40%, vorzugsweise mindestens 50%, mit dem Klebstoff versehen ist, wobei der Bedeckungsgrad im Verhältnis zum Flächeninhalt des Informationsträgers ausgedrückt ist.

6. Informationsträger nach einem der vorhergehenden Ansprüche, **dadurch gekennzeichnet, dass** der Klebstoff in einem Bedeckungsgrad von mindestens 10%, und höchstens 60%, vorzugsweise höchstens 50%, mit der Beschichtung versehen ist, wobei der Bedeckungsgrad im Verhältnis zum Flächeninhalt des Informationsträgers ausgedrückt ist.

7. Informationsträger nach einem der Ansprüche 1-6, **dadurch gekennzeichnet, dass** der Informationsträger aus Papier oder aus einem Folienmaterial besteht.

8. Informationsträger nach Anspruch 7, **dadurch gekennzeichnet, dass** das Papier ein gemäß ISO 536 gemessenes Flächengewicht von 60 bis 115 g/m² aufweist.

9. Informationsträger nach Anspruch 8, **dadurch gekennzeichnet, dass** das Folienmaterial ein gemäß ISO 536 gemessenes Flächengewicht von 30 bis 96 g/m² aufweist.

10. Wiederverwendbare Verbrauchsverpackung, zum Beispiel eine wiederverwendbare Flasche aus Kunststoff oder Glas, die mit einem Informationsträger versehen ist, **dadurch gekennzeichnet, dass** der Informationsträger einen Informationsträger nach einem der Ansprüche 1-9 betrifft.

11. Verfahren zum Herstellen eines waschbaren Informationsträgers für wiederverwendbare Verbrauchsverpackungen, wobei das Verfahren die folgenden Schritte umfasst:
- Bereitstellen einer Bahn oder eines Folienmaterials,
- Aufbringen einer Klebstoffschicht auf eine Seite der Bahn oder des Folienmaterials,
- Bereitstellen einer Beschichtungsschicht auf der Klebstoffschicht,
- Bereitstellen eines Aufdrucks auf der Gegenseite der Bahn oder des Folienmaterials,
- Stanzen von Informationsträgern in die Bahn oder das Folienmaterial,
**dadurch gekennzeichnet, dass** die Beschichtungsschicht in einem nicht durchgängigen Muster aufgebracht wird.

12. Verfahren nach Anspruch 11, **dadurch gekennzeichnet, dass** die Klebstoffschicht in einem nicht durchgängigen Muster bereitgestellt wird.

13. Verfahren nach Anspruch 11 oder 12, **dadurch gekennzeichnet, dass** eine Seite der Bahn oder des Folienmaterials bereits mit einer Klebstoffschicht versehen ist und die Beschichtungsschicht auf diese Klebstoffschicht aufgebracht wird.

14. Verfahren nach einem der Ansprüche 10-14, **dadurch gekennzeichnet, dass** die Klebstoffschicht aus einem Klebstoff mit einer Glasübergangstemperatur von unter -30°C besteht.

15. Verfahren nach einem der Ansprüche 11-14, wobei ein Informationsträger nach einem der Ansprüche 1-9 hergestellt wird.

## Revendications

1. Support d'informations pour un emballage de consommation réutilisable, par exemple une bouteille réutilisable en plastique ou en verre, comprenant au moins deux côtés dont un côté avant est muni d'informations et un côté arrière est muni au moins partiellement d'une colle ayant une température de transition vitreuse inférieure à -30°C, **caractérisé en ce que** ladite colle est au moins partiellement munie d'un revêtement, ledit revêtement étant fourni en un motif discontinu.

2. Support d'informations selon la revendication 1, **caractérisé en ce que** la colle est fournie en un motif discontinu.

3. Support d'informations selon la revendication 1 ou 2, **caractérisé en ce que** le motif discontinu est constitué d'un motif de lignes.

4. Support d'informations selon la revendication 1 ou 2, **caractérisé en ce que** le motif discontinu consiste en une pluralité de figures géométriques.

5. Support d'informations selon l'une quelconque des revendications 1-4, **caractérisé en ce que** le côté arrière du support d'informations est muni de la colle dans un degré de couverture d'au moins 40%, de préférence d'au moins 50%, dans lequel le degré de couverture est exprimé par rapport à la surface du support d'informations.

6. Support d'informations selon l'une quelconque des revendications précédentes, **caractérisé en ce que** la colle est munie du revêtement dans un degré de couverture d'au moins 10% et d'au plus 60%, de préférence d'au plus 50%, dans lequel le degré de couverture est exprimé par rapport à la surface du support d'informations.

7. Support d'informations selon l'une quelconque des revendications 1-6, **caractérisé en ce que** le support d'informations est constitué de papier ou d'un matériau de film.

8. Support d'informations selon la revendication 7, **caractérisé en ce que** le papier a un grammage de 60 à 115 g/m², mesuré selon la norme ISO 536.

9. Support d'informations selon la revendication 8, **caractérisé en ce que** le matériau de film a un grammage de 30 à 96 g/m², mesuré selon la norme ISO 536.

10. Emballage de consommation réutilisable, par exemple une bouteille en plastique ou en verre réutilisable, munie d'un support d'informations, **caractérisé en ce que** le support d'informations concerne un support d'informations selon l'une quelconque des revendications 1-9.

11. Procédé de production de supports d'informations lavables pour emballages de consommation réutilisables, lequel procédé comprend les étapes suivantes:
- fournir un matériau de bande ou de film;
- appliquer une couche de colle sur un côté du matériau de bande ou de film;
- fournir une couche de revêtement sur la couche de colle;
- fournir une impression sur le verso du matériau de bande ou de film;
- poinçonner des supports d'informations dans le matériau de bande ou de film;
**caractérisé en ce que** la couche de revêtement est appliquée en un motif discontinu.

12. Procédé selon la revendication 11, **caractérisé en ce que** la couche de colle est fournie en un motif discontinu.

13. Procédé selon la revendication 11 ou 12, **caractérisé en ce qu'**un côté du matériau de bande ou de film est déjà pourvu d'une couche de colle, et la couche de revêtement est appliquée sur cette couche de colle.

14. Procédé selon l'une quelconque des revendications 10-14, **caractérisé en ce que** la couche de colle consiste en une colle ayant une température de transition vitreuse inférieure à -30°C.

15. Procédé selon l'une quelconque des revendications 11-14, dans lequel un support d'informations selon l'une quelconque des revendications 1-9 est produit.
